# EUROPEAN PATENT APPLICATION

(11) **EP 2 312 882 A1**
(43) Date of publication of application: **20.04.2011**
(21) Application number: 09804823.4
(22) Date of filing: 24.06.2009
(51) Int. Cl.: H04W 24/04, H04W 8/04, H04W 8/26, H04W 80/04

(54) **COMMUNICATION SYSTEM, CONNECTION DEVICE, INFORMATION REPORT METHOD, AND PROGRAM**

(30) Priority: 07.08.2008 JP 2008204498
(71) Applicant: NEC Corporation, Minato-ku Tokyo 108-8001 (JP)
(72) Inventor: ZEMBUTSU, Hajime, Tokyo 108-8001 (JP)
(74) Representative: Glawe, Delfs, Moll
(86) International application number: PCT/JP2009/061484
(87) International publication number: WO 2010/016336

(57) **Abstract**

A communication system includes a terminal, a server apparatus that manages the movement of the terminal, and a connection apparatus that connects the terminal to the server apparatus. The connection apparatus both records the MAC address of the terminal and records maintenance function execution necessity information that indicates whether a maintenance function must be executed for the terminal in association with the MAC address of the terminal, and uses a Mobile IP to transmit to the server apparatus a message that contains the maintenance function execution necessity information that was placed in association with the MAC address of the terminal.

## Description

### Technical Field

The present invention relates to a communication system, a connection apparatus, an information communication method, and a program.

### Background Art

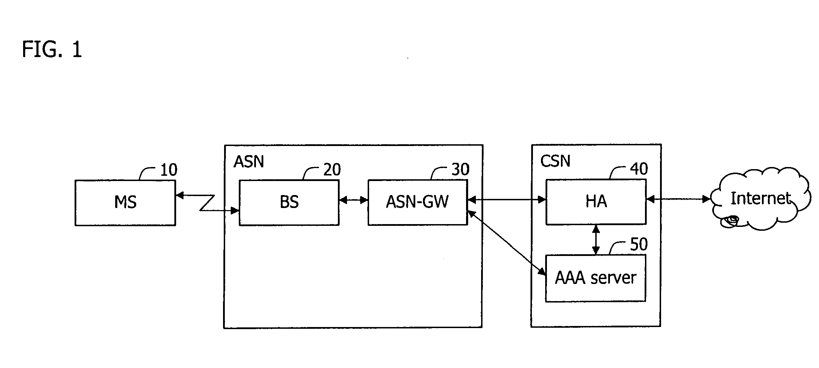

A wireless communication system such as shown in FIG. 1 is prescribed in the specification decided upon in the WiMAX (Worldwide Interoperability for Microwave Access) Forum.

As shown in FIG. 1, the WiMAX wireless communication system includes: MS (mobile station) 10, BS (Base Station) 20 and ASN-GW (ASN-Gateway) 30 arranged in an ASN (Access Service Network); and HA (Home Agent) 40 and AAA (Authentication, Authorization, Accounting) server 50 arranged in a CSN (Connectivity Service Network) (for example, see Patent Documents 1 and 2).

BS 20 is a base station that carries out wireless communication with MS 10, which is a terminal, and ASN-GW 30 is a gateway apparatus that connects MS 10 to CSN by way of BS 20.

HA 40 is a server apparatus that manages the movement of MS 10, and AAA server 50 is a server apparatus that carries out authentication, authorization, and accounting of MS 10. In FIG. 1, HA 40 is connected to the Internet, but HA 40 can also be connected to an IP (Internet Protocol) network (such as an in-company network) other than the Internet.

In a WiMAX wireless communication system, device authentication that authenticates whether MS 10 is connected to the ASN and user authentication that authenticates whether the user of MS 10 is party to a contract for service of the ASN are carried out as authentication for MS 10.

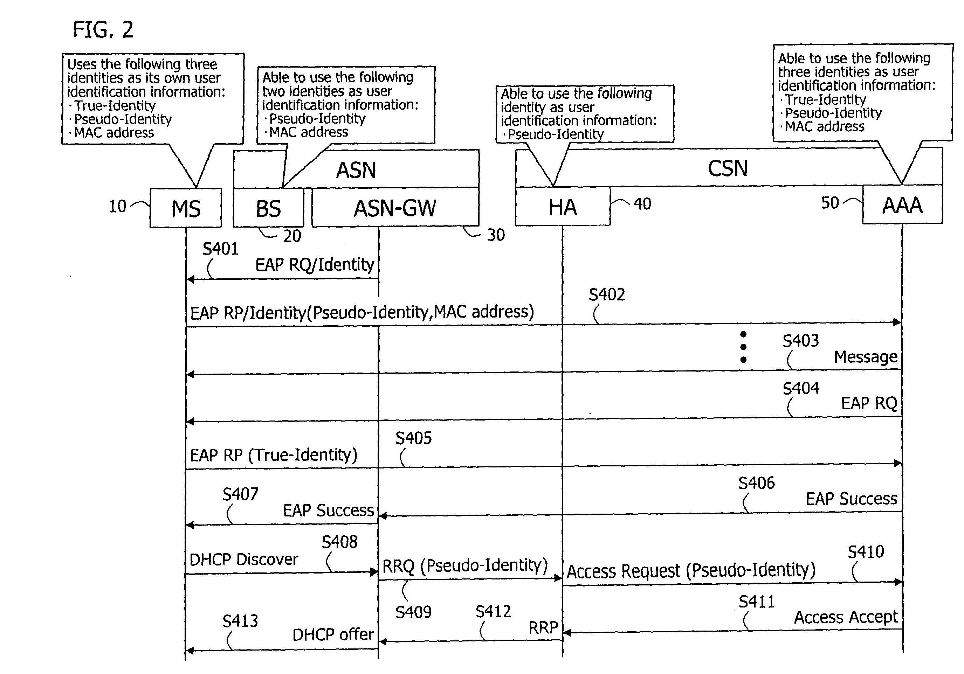

The device/user authentication sequence in a related WiMAX wireless communication system is next described with reference to FIG. 2.

A device/user authentication sequence is here described in which Proxy Mobile IPv4 is applied.

In addition, it is assumed that prior to the device/user authentication sequence shown in FIG. 2, BS 20 acquires from MS 10 the MAC (Media Access Control) address of MS 10 in a DL (Down Link) - MAP sequence (not shown in the figure), ASN-GW 30 acquires from BS 20 the MAC address of MS 10 in an MS - PreAttachment sequence (not shown in the figure), and MS 10 is identifiable by means of the MAC address within the ASN.

As shown in FIG. 2, ASN-GW 30 in Step S401 uses Auth.Relay protocol to transmit to MS 10 by way of BS 20 an EAP RQ (request)/Identity message that requests the start of device/user authentication and the sending of Identity by means of EAP (Extensible Authentication Protocol).

As a response to the EAP RQ/Identity message, MS 10 in Step S402 next uses EAP to transmit an EAP RP (Response)/Identity message that includes a pseudo-identity, which is the pseudo-NAI (Network Access Identity) of MS 10, and a MAC address to AAA server 50 by way of BS 20 and ASN-GW 30.

In this way, ASN-GW 30 acquires the pseudo-identity of MS 10 and places the pseudo-identity in correspondence with the acquired MAC address. In addition, AAA server 50 acquires the pseudo-identity and MAC address of MS 10.

Upon success in device authentication for MS 10, AAA server 50 next uses EAP to transmit a message reporting the success of the device authentication (the name of this message differs according to the authentication method) to MS 10 by way of ASN-GW 30 and BS 20 in Step S403. In Step S404, AAA server 50 further transmits an EAP RQ message requesting the transmission of the true-identity, which is the true NAI of MS 10, to MS 10 by way of ASN-GW 30 and BS 20.

In Step S405, MS 10 next uses EAP to transmit to AAA server 50 by way of BS 20 and ASN-GW 30 an EAP RP message that contains the true-identity of MS 10 as a response to the EAP RQ message.

AAA server 50 thus acquires the true-identity of MS 10 and places the true-identity in association with the acquired pseudo-identity.

Upon succeeding in the user authentication for MS 10, AAA server 50 next in Step S406 uses EAP to transmit an EAP Success message reporting the success in the user authentication to ASN-GW 30. In Step S407, ASN-GW 30 then uses Auth.Relay protocol to transfer the EAP Success message to MS 10 by way of BS 20.

In order to establish a session, MS 10 next uses DHCP (Dynamic Host Configuration Protocol) to transmit to ASN-GW 30 by way of BS 20 a DHCP Discover message requesting assignment of an IP (Internet Protocol) address.

In Step S409, ASN-GW 30 then uses Mobile IP to transmit to HA 40 an RRQ (Registration Request) message that includes the pseudo-identity of MS 10 requesting connection to the CSN of MS 10.

HA 40 thus acquires the pseudo-identity of MS 10. As a result, HA 40 is subsequently able to use the NAI as user identity information.

At this time, the reason that the NAI that is reported to HA 40 is a pseudo-identity is as follows. Specifically, the NAI that is reported from ASN-GW 30 to HA 40 is included in the Extension field of the Mobile IP, whereby plain data flows to the ASN and CSN unless a security tunnel such as IPsec (Security Architecture for IP) is used. As a result, in a WiMAX wireless communication system, only MS 10 and AAA server 50 use the true-identity and other nodes use the pseudo-identity. As a result, the NAI that is reported from ASN-GW 30 to HA 40 is the pseudo-identity. In addition, the correspondence table of pseudo-identity and true-identity is held only by MS 10 and AAA server 50.

In Step S410, HA 40 next uses an AAA protocol (for example, RADIUS (Remote Access Dial In User Service) protocol) to transmit to AAA server 50 an Access Request message that includes the pseudo-identity of MS 10 requesting the result of authenticating MS 10.

In Step S411, AAA server 50 next uses an AAA protocol to transmit to HA 40 an Access Accept message reporting the result of authenticating MS 10 as a response to the Access Request message.

HA 40 thus verifies the result of authenticating MS 10.

In Step S412, HA 40 next uses Mobile IP to transmit to ASN-GW 30 a RRP (Registration Response) message reporting permission to connect to the CSN of MS 10 as a response to the RRQ message.

In Step S413, ASN-GW 30 then uses DHCP to transmit to MS 10 by way of BS 20 a DHCP Offer message reporting a candidate IP address to be assigned to MS 10 as the response to the DHCP Discover message.

MS 10 thus acquires an IP address and begins the process for establishing a session.

In this way, MS 10 uses three identities: the true-identity, the pseudo-identity, and the MAC address, as its own user identification information in a WiMAX wireless communication system.

BS 20 and ASN-GW 30 are able to use two of these, the pseudo-identity and the MAC address, as the user identification information of MS 10.

HA 40 is able to use only the pseudo-identity as the user identification information of MS 10.

Finally, AAA server 50 is able to use the three identities, the true-identity, the pseudo-identity, and the MAC address, as the user identification information of MS 10.

### Literature of the Prior Art

### Patent Documents

Patent Document 1: JP-A-2008-035248
Patent Document 2: JP-A-2008-092577

### Summary of the Invention

### Problem to be Solved by the Invention

Each of the nodes MS 10, BS 20, ASN-GW 30, HA 40, and AAA server 50 are equipped with maintenance functions that are executed for the user of MS 10. Examples of the maintenance functions are next described.

### · Signal monitoring function

This is a function of recording signals relating to a designated user. For example, of the signals that are transferred using Mobile IP and AAA protocol, HA 40 records those signals relating to a designated user.

### · Connection regulation function

This is a function of rejecting the connection request of a designated user. For example, as a response to an RRQ message requesting connection to the CSN of a designated user, HA 40 returns an error by the RRP message.

### · Congestion regulation exception function

This is a function of accepting a connection request by an RRQ message of only a designated user even when in the state of discarding connection requests from general users. For example, HA 40 accepts a connection request of only a designated user even when HA 40 is in an HA congestion state.

### · Communication interception function

This is a function of recording the communication data of a designated user. For example, after the generation of a tunnel for passing communication data that are transferred using Mobile IP, HA 40 records communication data that are actually transferred between MS 10 and the CSN by way of this tunnel.

However, the maintenance functions that are executed for a user differ for each user. For example, although all of the above-described four maintenance functions are executed for a particular user, only the congestion regulation exception function among the above-described four maintenance functions is executed for another user.

Accordingly, in order to execute a maintenance function, each node must first designate a user who is connected to its own node and then determine whether a maintenance function is to be executed for that user.

MS 10 and AAA server 50 are able to manage users using their true-identities and therefore have no problem in designating users.

BS 20 and ASN-GW 30, while being components that do not know true-identities, carry out user management by the MAC address apart from the NAI and therefore can carry out user designation.

However, HA 40 can carry out user management by only the pseudo-identity.

Because the uniqueness of a pseudo-identity is guaranteed in each session, following the establishment of a session, HA 40 is able to carry out user designation from the session. However, a pseudo-identity in some cases is random-number generated by MS 10 in an authentication sequence by means of EAP, and the problem therefore arises that HA 40 is unable to designate a user before the establishment of a session and is thus unable to determine whether or not a maintenance function must be executed.

In addition, when there is no correspondence table of pseudo-identities and true-identities held by other nodes, the problem arises that HA 40 is unable to designate the user of a Mobile IP session and is unable to determine whether or not a maintenance function must be executed.

It is therefore an object of the present invention to provide a communication system, a connection apparatus, an information communication method, and a program that enable a solution to any of the above-described problems.

### Means for Solving the Problem

The communication system of the present invention includes a terminal, a server apparatus that manages the movement of the terminal, and a connection apparatus that connects the terminal and the server apparatus, wherein:
the connection apparatus both records the MAC address of the terminal and records maintenance function execution necessity information that indicates whether a maintenance function must be executed for the terminal in association with the MAC address of the terminal; and uses a Mobile IP to transmit to the server apparatus a message that contains the maintenance function execution necessity information that was placed in association with the MAC address of the terminal.

The connection apparatus of the present invention is a connection apparatus that connects the terminal to the server apparatus that manages the movement of the terminal, and includes:
a recording unit that both records the MAC address of the terminal and records maintenance function execution necessity information that indicates whether a maintenance function must be executed for the terminal in association with the MAC address of the terminal;
a control unit that includes the maintenance function execution necessity information that was placed in association with the MAC address of the terminal in a message; and
a transmission unit that uses a Mobile IP to transmit the message to the server apparatus.

The information communication method of the present invention is realized by a connection apparatus that connects a terminal with a server apparatus that manages movement of the terminal and includes:
a recording step of both recording the MAC address of the terminal and recording maintenance function execution necessity information that indicates whether a maintenance function must be executed for the terminal in association with the MAC address of the terminal;
a control step of including maintenance function execution necessity information that was placed in association with the MAC address of the terminal in a message; and
a transmission step of using a Mobile IP to transmit the message to the server apparatus.

The program of the present invention causes a connection apparatus that connects a terminal with a server apparatus that manages movement of the terminal to execute:
a recording procedure of both recording the MAC address of the terminal and recording maintenance function execution necessity information that indicates whether a maintenance function must be executed for the terminal in association with the MAC address of the terminal;
a control procedure of including the maintenance function execution necessity information that was placed in association with the MAC address of the terminal in a message; and
a transmission procedure of using a Mobile IP to transmit the message to the server apparatus.

### Effect of the Invention

According to the communication system of the present invention, a connection apparatus uses Mobile IP to transmit to a server apparatus a message that includes maintenance function execution necessity information that corresponds to the MAC address of a terminal.

Accordingly, the effect is obtained in which, after receiving the message, the server apparatus is able to check the maintenance function execution necessity information and thus determine whether a maintenance function must be executed even though the server apparatus lacks a correspondence table of pseudo-NAI and true-NAI.

### Brief Description of the Drawings

FIG. 1 shows the overall configuration of a wireless communication system.

FIG. 2 is a sequence chart for explaining the device/user authentication sequence in a related wireless communication system.

FIG. 3 is a block diagram showing the configuration of an ASN-GW in the wireless communication system of an exemplary embodiment of the present invention.

FIG. 4 is a sequence chart for explaining the device/user authentication sequence in the wireless communication system of an exemplary embodiment of the present invention.

### Best Mode for Carrying Out the Invention

A best mode of carrying out the present invention is next described with reference to the accompanying drawings.

In the exemplary embodiment that is described hereinbelow, a case is described in which the communication system of the present invention is a WiMAX wireless communication system, but the present invention is not limited to this form and may also be a wireless communication system of another communication mode, a wired communication system, or a mixed wireless/wired communication system.

In the wireless communication system of the present exemplary embodiment, ASN-GW 30 of the constituent elements of the wireless communication system of FIG. 1 has been changed to ASN-GW 30A, and Step S409 relating to an RRQ message of the processes in the device/user authentication sequence of FIG. 2 has been changed to Step S409A.

The following explanation therefore focuses on ASN-GW 30A that carries out processes relating to an RRQ message.

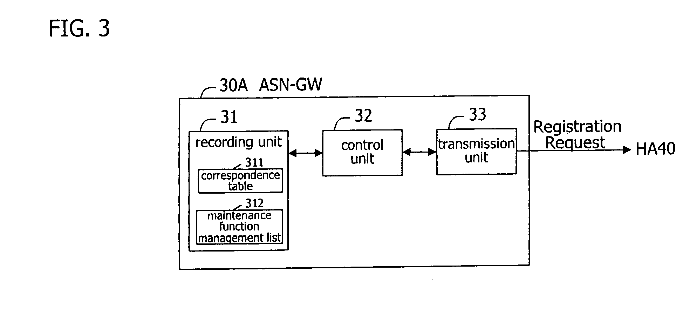

FIG. 3 is a block diagram showing the configuration of ASN-GW 30A in the present exemplary embodiment. FIG. 3 shows only the configuration of parts that carry out processes relating to an RRQ message.

As shown in FIG. 3, ASN-GW 30A in the present exemplary embodiment includes recording unit 31, control unit 32, and transmission unit 33.

Recording unit 31 records correspondence table 311 and maintenance management function list 312.

The MAC address of MS 10 that is acquired in a MS-PreAttachment sequence (not shown) that precedes a device/user authentication sequence and a pseudo-identity of MS 10 that is acquired in the device/user authentication sequence are recorded in association with each other in correspondence table 311.

Maintenance function execution necessity information that indicates whether HA 40 must execute a maintenance function for MS 10 is recorded in maintenance management function list 312 for each MAC address (each user) in association with the MAC address of MS 10. For example, recording unit 31 records the maintenance management function list 312 such as shown in table 1 for each MAC address.

**Table 1**

| Maintenance Function List | Maintenance Function Execution Necessity Information |
|---|---|
| signal monitoring function | do not execute |
| connection regulation function | do not execute |
| congestion regulation exception function | execute |
| communication interception function | do not execute |
| : | : |

Here, AAA server 50 carries out the device/user authentication for MS 10 and typically holds detailed information of all users. As a result, it is relatively easy to make the configuration of AAA server 50 a configuration that will have a maintenance management function list for each user.

In contrast, ASN-GW 30A typically does not hold detailed information of all users, and adopting a configuration that holds a maintenance management function list for each user is therefore problematic.

As a result, ASN-GW 30A may hold maintenance management function list 312 of only specific users (users freely selected by an operator and for whom detailed information has been registered), and may apply a default maintenance management function list for other users.

Alternatively, a maintenance management function list may be created for each user in AAA server 50, and ASN-GW 30A may have the maintenance management function list transmitted from AAA server 50 beforehand and then use this list as maintenance management function list 312.

Control unit 32 extracts the pseudo-identity and MAC address of MS 10 from correspondence table 311.

In addition, control unit 32 extracts from maintenance management function list 312 the maintenance function execution necessity information that corresponds to the MAC address that was extracted as described above.

Control unit 32 further adds an Extension field to an RRQ message and includes the maintenance function execution necessity information that was extracted as described above in the Extension field.

Transmission unit 33 uses a Mobile IP to transmit to HA 40 the RRQ message in which the maintenance function execution necessity information was included in the Extension field by control unit 32.

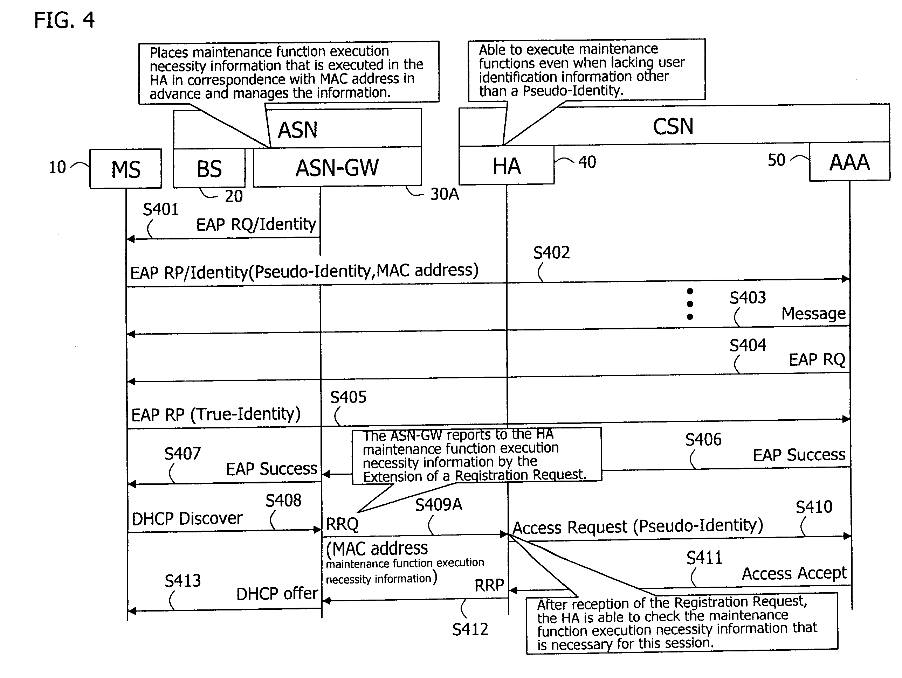

The device/user authentication sequence in the present exemplary embodiment is next described with reference to FIG. 4. In FIG. 4, steps that are the same as steps in FIG. 2 are given the same reference numbers.

As shown in FIG. 4, the processes of Steps S401 ∼ S408 that are the same as in FIG. 2 are first carried out.

Next, in Step S409A, ASN-GW 30A extracts from correspondence table 3 11 the pseudo-identity and MAC address of MS 10 that was transmitted in a DHCP Discover message in Step S408. ASN-GW 30A next extracts from maintenance management function list 312 the maintenance function execution necessity information that corresponds to the MAC address that was extracted as described above. ASN-GW 30A then includes the above-described maintenance function execution necessity information that was extracted as described above in the Extension field of an RRQ message and uses a Mobile IP to transmit the RRQ message to HA 40.

The processes of Steps S410 ∼ S413 that are similar to those of FIG. 2 are then carried out.

In the present exemplary embodiment as described hereinabove, ASN-GW 30A uses a Mobile IP to communicate to HA 40 by means of the RRQ message the maintenance function execution necessity information that indicates whether a maintenance function must be executed for MS 10 that is attempting to establish a session.

As a result, following the reception of the RRQ message, HA 40 is able to check the maintenance function execution necessity information that is necessary for the session that MS 10 is attempting to establish.

HA 40 is therefore able to determine whether a maintenance function must be executed before the establishment of a session even when lacking user identification information other than the pseudo-identity or a correspondence table of pseudo-identity and true-identity.

Although the present invention has been described with reference to an exemplary embodiment, the present invention is not limited to this form. The constitution and details of the present invention are open to various modifications within the scope of the present invention that will be understood by one of ordinary skill in the art.

For example, although the device/user authentication sequence has been described for a case in which Proxy Mobile IPv4 was applied, the present invention is not limited to this form, and other device/user authentication sequences (for example, a case in which Client Mobile IPv4 is applied) may also be applied.

Although explanation referred to a case in which the connection apparatus that is opposite to HA 40 is ASN-GW 30A in the present exemplary embodiment, the present invention is not limited to this form. For example, when the present invention is applied in a network other than WiMAX, the connection apparatus that confronts HA 40 is in some cases an FA (Foreign-Agent) and not necessarily ASN-GW 30A. In such cases, the connection apparatus of the present invention is applied to the FA and functions similar to those of ASN-GW 30A shown in FIG. 3 may be provided in the FA.

The method that is carried out in ASN-GW 30A of the present invention may be applied to a program for causing execution by a computer. In addition, the program can be stored in a storage medium and may be provided to the outside by way of a network.

The present application claims priority based on Japanese Patent Application No. 2008-204498 for which application was submitted on August 7, 2008 and incorporates all of the disclosures of that application.

## Claims

1. A communication system that includes a terminal, a server apparatus that manages movement of said terminal, and a connection apparatus that connects said terminal and said server apparatus, wherein said connection apparatus:
both records a MAC (Media Access Control) address of said terminal and records maintenance function execution necessity information that indicates whether a maintenance function must be executed for said terminal in association with the MAC address of said terminal; and
uses a Mobile IP (Internet Protocol) to transmit to said server apparatus a message that contains the maintenance function execution necessity information that was placed in association with the MAC address of said terminal.

2. The communication system as set forth in claim 1, wherein said message is a Registration Request message.

3. The communication system as set forth in claim 2, wherein said connection apparatus adds an Extension field to said Registration Request message and includes said maintenance function execution necessity information in said Extension field.

4. A connection apparatus that connects a terminal to a server apparatus that manages movement of said terminal, comprising:
a recording unit that both records a MAC address of said terminal and records maintenance function execution necessity information that indicates whether a maintenance function must be executed for said terminal in association with the MAC address of said terminal;
a control unit that includes maintenance function execution necessity information that was placed in association with the MAC address of said terminal in a message; and
a transmission unit that uses a Mobile IP to transmit said message to said server apparatus.

5. The connection apparatus as set forth in claim 4, wherein said message is a Registration Request message.

6. The connection apparatus as set forth in claim 5, wherein said control unit adds an Extension field to said Registration Request message and includes said maintenance function execution necessity information in said Extension field.

7. An information communication method that is realized by a connection apparatus that connects a terminal with a server apparatus that manages movement of said terminal, said information communication method comprising:
a recording step of both recording a MAC address of said terminal and recording maintenance function execution necessity information that indicates whether a maintenance function must be executed for said terminal in association with the MAC address of said terminal;
a control step of including maintenance function execution necessity information that was placed in association with the MAC address of said terminal in a message; and
a transmission step of using a Mobile IP to transmit said message to said server apparatus.

8. The information communication method as set forth in claim 7, wherein said message is a Registration Request message.

9. The information communication method as set forth in claim 8, wherein in said control step, an Extension field is added to said Registration Request message, and said maintenance function execution necessity information is included in said Extension field.

10. A program that causes a connection apparatus that connects a terminal with a server apparatus that manages movement of said terminal to execute:
a recording procedure of both recording a MAC address of said terminal and recording maintenance function execution necessity information that indicates whether a maintenance function must be executed for said terminal in association with the MAC address of said terminal;
a control procedure of including said maintenance function execution necessity information that was placed in association with the MAC address of said terminal in a message; and
a transmission procedure of using a Mobile IP to transmit said message to said server apparatus.

11. The program as set forth in claim 10, wherein said message is a Registration Request message.

12. The program as set forth in claim 11, wherein in said control procedure, an Extension field is added to said Registration Request message, and said maintenance function execution necessity information is included in said Extension field.
